# EUROPÄISCHE PATENTSCHRIFT

(11) **EP 3 883 733 B1**
(45) Veröffentlichungstag und Bekanntmachung des Hinweises auf die Patenterteilung: **21.12.2022**
(21) Anmeldenummer: 20793253.4
(22) Anmeldetag: 13.10.2020
(51) Int. Cl.: B29C 48/275, B29C 48/525, B29C 48/39, B29C 48/385, B29C 48/285, B29B 17/00, B29B 17/04, B29B 7/66, B29B 9/02

(54) **VORRICHTUNG ZUR VERARBEITUNG VON MATERIAL, INSBESONDERE VON KUNSTSTOFFMATERIAL**
DEVICE FOR PROCESSING MATERIAL, IN PARTICULAR PLASTICS MATERIAL
DISPOSITIF DE TRAITEMENT DE MATÉRIAU, EN PARTICULIER UN MATÉRIAU PLASTIQUE

(30) Priorität: 16.10.2019 AT 508932019
(43) Veröffentlichungstag der Anmeldung: 29.09.2021
(73) Patentinhaber: PureLoop GesmbH, 4052 Ansfelden (AT)
(72) Erfinder: GRADL-LAMI, Klaus, 4274 Schönau im Mühlkreis (AT); DOBERSBERGER, Manfred, 4020 Linz (AT); GRUBER, Florian, 4690 Schwanenstadt (AT); FEICHTINGER, Klaus, 4040 Linz (AT)
(74) Vertreter: Wildhack & Jellinek
(86) Internationale Anmeldenummer: PCT/AT2020/060365
(87) Internationale Veröffentlichungsnummer: WO 2021/072465

(56) Entgegenhaltungen:
- EP-A1- 1 343 623
- EP-A1- 1 918 084
- WO-A1-03/076153
- AT-B- 407 971
- DE-A1- 19 714 944

## Beschreibung

Die Erfindung betrifft eine Vorrichtung zur Verarbeitung von Material gemäß dem Oberbegriff von Anspruch 1.

Bei der Verarbeitung von zu zerkleinernden Werkstoffen, insbesondere aus thermoplastischen Kunststoffen, werden häufig Einwellenzerkleinerer angewendet. Solche Einwellenzerkleinerer finden auf zahlreichen Gebieten Anwendung, insbesondere für die Zerkleinerung von Kunststoffmaterial, das für Recyclingzwecke vorzerkleinert werden soll. Solches Material fällt in der Regel in Form von Folien oder Extrusions-Anfahrfladen, Flaschen und anderen Behältern an, zumeist im verschmutzten Zustand.

Es gibt Einwellenzerkleinerer, die in einem Arbeitsschritt die zerkleinerten Teilchen, zum Teil durch den Schnitt, erwärmen, und in einen konischen Übergang, der als Einschnecke ausgebildet ist, weitertransportieren. Diese Teilchen werden in dem meist kegeligen Teil weiter verdichtet und zum Teil weiter erwärmt. Ein Teil dieser thermoplastischen Teilchen erweicht dabei. Auf der gleichen Achse folgt dann ein Extruder, der diese Teilchen weiter verdichtet und erwärmt und in einen flüssigen Zustand überführt. Derartige Vorrichtungen sind beispielsweise aus der AT 407 971 B bekannt. Eine solche Bauweise führt jedoch ab einer gewissen Baugröße zu sehr großen und langen, nicht mehr gut betreibbaren Anlagen.

In der EP 1 918 084 A1 ist eine Vorrichtung zum Aufbereiten von thermoplastischem Kunststoffmaterial beschrieben mit einer Zerkleinerungseinrichtung zum Zerkleinern des Kunststoffmaterials und mit einem Extruder, wobei die Zerkleinerungseinrichtung einen Zylinder mit einer Zuführöffnung und mit einer Messerwelle aufweist, wobei der Extruder eine Extruderschnecke in einem Schneckenrohr aufweist und wobei der Zylinder der Zerkleinerungseinrichtung über eine Verbindungsöffnung mit dem Schneckenrohr des Extruders verbunden ist. Die Verbindungsöffnung ist mit Bezug zu einer Ebene, welche in der Drehachse der Messerwelle und im rechten Winkel zur Drehachse der Extruderschnecke liegt, in der Drehrichtung der Messerwelle gesehen asymmetrisch angeordnet. Die Längsachse der Schnecke ist zur Längsachse der Extruderschnecke um einen Versatz v versetzt, der Versatz v liegt hier allerdings weit außerhalb des Radius der Extruderschnecke.

In der EP 1 343 623 A1 ist eine Extrusionsanlage für das Recycling von nicht-rieselfähigen Kunststoffen beschrieben mit einem Extruder mit Extruderschnecke und einem Zuführaggregat, das von einem Vorratstrichter beschickt die Formmasse in eine Extrudereinfüllzone der Extruderschnecke übergibt. Auch hier liegt der Versatz v der Längsachse der Schnecke allerdings weit außerhalb des Radius der Extruderschnecke.

Um die Skalierung zu höheren Durchsätzen bzw. Baugrößen zu ermöglichen, muss zudem von einem einzigen Antrieb abgegangen werden. Es ist dabei möglich einen separaten Extruder, vornehmlich mit einem eigenen Antrieb, an die Zerkleinerereinheit, ebenfalls vornehmlich mit einem eigenen Antrieb, direkt anzukoppeln.

Die Art und Weise der Einbringung des vorbehandelten Materials in den Extruder ist allerdings immer ein sehr kritischer Punkt. Eine unvorteilhafte Einbringung führt oft zu ungenügenden und instabilen Füllgraden in der Extrusionsschnecke, was wiederum eine effiziente oder qualitativ ausreichende Extrusion verhindert.

Grundsätzlich ist jeder Einstopfvorgang oder Füllvorgang in einen Extruder kritisch. In vielen Fällen muss dabei auch eine Richtungsänderung des Materials und ein teilweises Verschließen der Einzugsöffnung durch den Schneckengang des Extruders berücksichtigt werden. Dies sind zwei wesentliche Einflussfaktoren.

Bei manchen Vorrichtungen gelingt es durch in einem Behälter rotierende Misch- und Zerkleinerungswerkzeuge einen Beschickungsdruck zu erzeugen, sofern das Material in teilchenförmiger, fluider Form vorhanden ist. Dabei ergibt sich auch der Vorteil, dass überschüssiges Material, das der Extruder nicht aufnehmen kann, wieder in den Behälter retour gelangt. Dies ist bei einer Stopfschnecke allerdings deutlich schwieriger.

Es ist damit Aufgabe der vorliegenden Erfindung eine Vorrichtung zu schaffen, die einerseits eine vertretbare Baugröße bei höheren Durchsätzen aufweist und gut betreibbar ist, und gleichzeitig eine vorteilhafte Befüllung des Extruders und eine effiziente oder qualitativ hochwertige Extrusion gewährleistet.

Diese Aufgabe wird bei einer derartigen Vorrichtung durch die kennzeichnenden Merkmale des Anspruch 1 gelöst.

Es ist dabei vorgesehen,
- dass die zentrale Längsachse der Schnecke zur zentralen Längsachse der Extruderschnecke winkelig, insbesondere in einem Winkel von 80° bis 100°, vorzugsweise 90°, ausgerichtet ist,
- und dass die Längsachse der Schnecke zur Längsachse der Extruderschnecke um den Versatz (v) in Richtung der Drehrichtung der Extruderschnecke bei bzw. im Bereich der Austragsöffnung bzw. der Einzugsöffnung versetzt ist.

Erfindungsgemäß ist dabei vorgesehen, dass der Versatz (v) im Bereich von 0 < v < R liegt, wobei R der Radius der Extruderschnecke (11) ist. Auf diese Weise ist eine besonders vorteilhafte Befütterung des Extruders möglich.

Durch die winkelige Ankoppelung der Schnecke, insbesondere eine Förder-, Transport- bzw. Agglomerierschnecke, an den Extruder, wobei das Material seitlich in den Extruder gefördert wird, wird einerseits gewährleistet, dass die Dimensionen der Vorrichtung auch bei höheren Durchsatzmengen kompakt sind und die Anlage gut betreibbar bleibt.

Zusätzlich wird durch den besonderen Versatz der Längsachse der Schnecke zur Längsachse der Extruderschnecke auch eine bessere und stabilere Befüllung des Extruders gewährleistet. Gerade durch die durch die winkelige Anordnung bedingte Richtungsänderung des Materials ergeben sich hier noch speziellere Anforderungen.

Durch den besonderen Versatz wird einerseits ein gewisser Platz für die Umlenkung des Materials im Extrudereinzug geschaffen. Sollte hier also eine leichte Überfütterung auftreten, kann das bereits dadurch ein wenig abgefedert werden.

Andererseits ist die besondere Geometrie im Ankoppelungsbereich zu berücksichtigen: So dreht sich der "Korkenzieher" aus der Schnecke gegen die bzw. in Richtung der Extrudervorrichtung, das heißt gegen die aktive Flanke der Extruderschnecke. Eine Schnecke hat auf der aktiven Flanke immer eine höhere Dichte als auf der passiven Flanke, vor allem wenn das Material noch nicht aufgeschmolzen ist und die Schnecke teilgefüllt ist. Dieses mehr verdichtete Material, das auch zum Teil zusammenklebt, behält die Schneckenform nach Verlassen der Förderschnecke bei und wird so gegen die aktive Flanke der Extruderschnecke gedrückt. Dies bewirkt neben der stabileren Befüllung auch eine gewisse weitere Verdichtung.

Die Längsachse der Schnecke und die Längsachse der Extruderschnecke befinden sich dabei gerade nicht auf gleicher Höhe. Sie sind winkelig, vorteilhafterweise im Wesentlichen rechtwinkelig, zueinander ausgerichtet und definieren eine x-Achse und eine y-Achse. Der Versatz erfolgt in der z-Achse, also in einer Richtung normal zur Längsachse der Schnecke und zur Längsachse der Extruderschnecke. Wesentlich ist dabei die Richtung des Versatzes. Der Versatz erfolgt nämlich in diejenige Richtung, in die sich die Extruderschnecke im Bereich der bzw. direkt vor der Austragsöffnung dreht. Dreht sich die Extruderschnecke, von hinten bzw. vom Antrieb des Extruders aus betrachtet, also beispielsweise gegen den Uhrzeigersinn, so erfolgt der Versatz nach unten, wenn die Schnecke seitlich von links in den Extruder einmündet und damit die Befütterung von links erfolgt, ebenfalls von hinten bzw. vom Antrieb aus betrachtet. Solange der Versatz der Längsachse der Schnecke in der z-Achse in die vorgesehene Richtung erfolgt, ist es also unerheblich, ob der Versatz der Schnecke - abhängig von der Drehrichtung der Extruderschnecke und/oder der Zugabeseite in den Extruder - leicht nach oben oder nach unten im Vergleich zur Extruderschnecke erfolgt.

Gemäß einer besonders vorteilhaften Ausführungsform ist die Längsachse der Schnecke unterhalb der Längsachse des Extruders angeordnet, d.h. bei der Vorrichtung im Betriebszustand ist die Schnecke etwas näher beim Boden als die Extruderschnecke. Die Befütterung des Extruders erfolgt somit in den etwas bodennäheren Bereich der Extruderschnecke.

Die Schnecke mündet bevorzugt immer in den seitlichen Bereich des Extruders, auch wenn es sich um einen Extruder mit mehreren Schnecken, insbesondere um einen Doppelschneckenextruder handelt. In diesem Fall mündet die Schnecke vorteilhafterweise etwa in der Ebene, die von den Längsachsen der Extruderschnecken aufgespannt wird.

Gemäß einer weiteren bevorzugten Ausführungsform ist vorgesehen, dass die Einzugsöffnung des Extruders in Richtung des Versatzes eine Bodenfläche aufweist, die in einem Winkel α zur Längsachse geneigt ist und sich nach außen öffnet, wobei der Winkel α im Bereich von 0 ° < α < 20 ° liegt. Die Bodenfläche ist damit so geneigt, dass eine Art breite Zugangsrampe für das dem Extruder zugeführte Material geschaffen wird, die dann ansteigt und den Bereich der Fütterung stetig verkleinert, je näher das Material zur Extruderschnecke gelangt.

Es ist weiters vorteilhaft, wenn das, insbesondere zylindrische, Zerkleinerungsgehäuse einen größeren Innendurchmesser aufweist als das, insbesondere zylindrische, Gehäuse der Schnecke. Dadurch kann auf einfache Art eine Vorverdichtung des Materials bewerkstelligt werden. Auch aus konstruktiven Gründen ist es zumeist erwünscht, das Schneckengehäuse mit geringerem Durchmesser als das Gehäuse des Zerkleinerers auszubilden, um für letzteren ein großes Fassungsvolumen zu erzielen und anderseits den Aufwand für die Schnecke geringer zu halten.

In diesem Zusammenhang ist es besonders vorteilhaft, wenn das Gehäuse zylindrisch ist oder konische Form hat.

Eine günstige Ausgestaltung der Erfindung ergibt sich dann, wenn an die Austragöffnung des Gehäuses des Rotorkörpers das Gehäuse der Schnecke koaxial bzw. gleichachsig angeschlossen ist, wobei das eine Stirnende des Gehäuses der Schnecke die Einzugsöffnung für das von der Schnecke zu fördernde bzw. plastifizierende Material bildet, das dann, insbesondere im teilplastifizierten Zustand, am anderen Stirnende dieses Gehäuses austritt. Dies hat den Vorteil, dass die im Zerkleinerer auftretende, auf die Schneidvorgänge und die Reibung zurückzuführende Wärme verlustfrei durch das bearbeitete Material sofort in den Plastifizierbereich weitergeführt wird und dort für die Plastifizierung des Materials wirksam gemacht wird.

Gemäß einer besonders bevorzugten Ausführungsform ist vorgesehen, dass das im Durchmesser größere Zerkleinerungsgehäuse und das im Durchmesser kleinere Gehäuse der Schnecke, also die Zerkleinerungseinheit und die Schnecke, durch einen konischen Übergangsabschnitt miteinander verbunden sind. Dabei ist es insbesondere vorteilhaft, wenn im konischen Übergangsabschnitt eine konische Schnecke zur Förderung und vor allem auch zum Verdichten des Materials angeordnet ist. Durch die Verdichtung im konischen Übergang wird eine Erwärmung in diesem Bereich vorgenommen. Weiters kann eine Teilagglomerierung des Materials erfolgen. Dadurch wird im konischen Übergang zur Stopfschnecke zunächst vorgewärmtes und vorverdichtetes Material erzeugt. Damit wird die Richtungsänderung vereinfacht und der Füllgrad der Extruderschnecke hoch gehalten. Die Verdichtung des Materials erfolgt dabei bereits vor der Schnecke - im Gegensatz zu Anlagenkombinationen, bei denen nach einem Einwellenzerkleinerer Stopfschnecken ohne spezielle Vorverdichtungseinrichtung das weitgehend unverdichtete Material in den Extruder befördern oder bei denen die Schnecke die Verdichtung erst unmittelbar vor dem Eintritt in den Extruder vornimmt. Die Verdichtung des Materials und die Einförderung in den Extruder sind also auch örtlich getrennt. Dies führt zu genügenden und stabilen Füllgraden in der Extrusionsschnecke, womit eine besonders effiziente sowie qualitativ hochwertige Extrusion gewährleistet wird.

Gemäß einer weiteren bevorzugten Ausführungsform ist entsprechend vorgesehen, dass das Material den konischen Teil bevorzugt in eine zylindrische oder konische Einschnecke verlässt, die in weiterer Folge das Material in den Extruder befördert. Das Material wird dabei weiter erwärmt bzw. temperiert und in die Extruderschnecke seitlich eingebracht.

Die Schnecke kann vorteilhafterweise als eine nicht komprimierende Förderschnecke oder als eine das Material zumindest teilweise verdichtende, plastifizierende und/oder agglomerierende Schnecke, insbesondere eine Plastifizierschnecke, ausgebildet sein.

Eine für den Antrieb konstruktiv vorteilhafte Lösung ergibt sich, wenn die Schnecke mit einer in das ihr zugewendete Stirnende des Rotorkörpers hineinragenden Verlängerung ihres Kernes eine Abstützung für den Rotorkörper bildet. Dabei bilden die an der Innenwand des Gehäuses der Schnecke anliegenden Schneckengänge die Lagerung für das andere Ende des Rotorkörpers. Es entfällt daher eine andersartige Lagerung für das Austragsende des Rotorkörpers.

In diesem Zusammenhang ist es besonders vorteilhaft, wenn der Rotorkörper mit der Schnecke, und gegebenenfalls auch mit der konischen Schnecke, drehschlüssig gekoppelt und von einem gemeinsamen Antrieb angetrieben ist.

In den Zeichnungen ist der Erfindungsgegenstand anhand von Ausführungsbeispielen schematisch und beispielhaft dargestellt:
Fig. 1 zeigt ein Ausführungsbeispiel der erfindungsgemäßen Vorrichtung in perspektivischer Gesamtansicht.
Fig. 2 zeigt die erfindungsgemäße Vorrichtung in einem Schnitt von oben.
Fig. 3 zeigt einen Ausschnitt der erfindungsgemäßen Vorrichtung in einem Schnitt von der Seite.
Fig. 4 zeigt denselben Ausschnitt in einem Schnitt von oben.

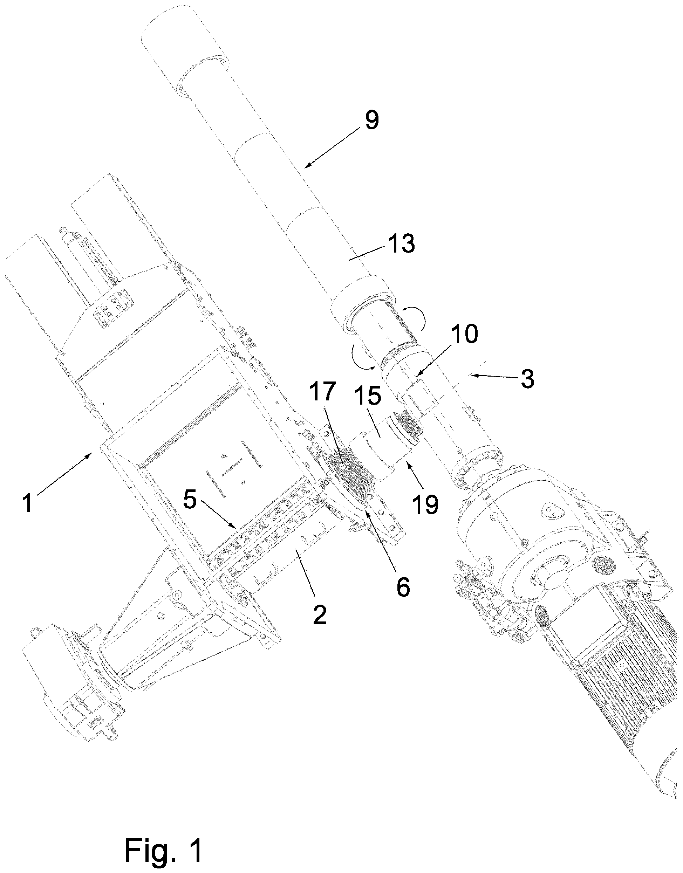

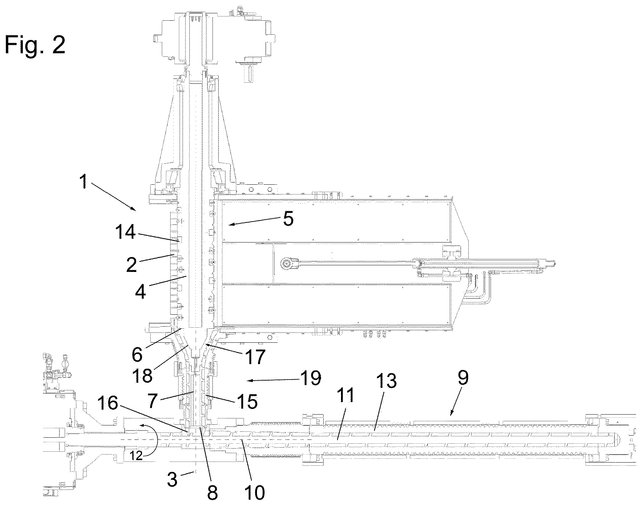

In den Fig. 1 und 2 ist die erfindungsgemäße Vorrichtung in ihrer Gesamtheit dargestellt. Die Vorrichtung umfasst als Hauptkomponenten eine Zerkleinerungseinheit 1, eine daran stromabwärts bzw. in Förderrichtung anschließende Fördereinheit 19 mit einer Schnecke 7 und einen wiederum stromabwärts bzw. in Förderrichtung daran anschließenden Extruder 9.

Die Zerkleinerungseinheit 1 dient zum Zerkleinern und gegebenenfalls Erwärmen des zugeführten Materials. Hierbei handelt es sich vorliegend um einen Einwellenzerkleinerer, mit einem Zerkleinerungsgehäuse 2, in dem ein zur Drehbewegung um seine Längsachse antreibbarer, walzenförmiger Rotorkörper 4 vorgesehen ist. Der Rotorkörper 4 trägt an seinem Umfang eine Vielzahl von Zerkleinerungswerkzeugen 14. Diese Messer arbeiten mit Gegenmessern zusammen, die an der Innenseite des Zerkleinerungsgehäuses 2 ortsfest angeordnet sind.

Das Zerkleinerungsgehäuse 2 ist im Wesentlichen zylindrisch und umschließt den Rotorkörper 4 über einen Großteil des Umfangs, wobei der freigelassene Umfangsbereich in der oberen Umfangshälfte liegt und die Zugabeöffnung 5 für das zu verarbeitende und zu zerkleinernde Material bildet. Über die Zugabeöffnung 5 wird das Material dem Rotorkörper 4 zugeführt und wird von diesem erfasst. Das so zerkleinerte Material wird in Richtung zu einem stirnseitig am Zerkleinerungsgehäuse 2 angeordneten Ausgangsbereich 6 gefördert.

An den Ausgangsbereich 6 der Zerkleinerungseinheit 1 ist stromabwärts bzw. in Materialförderrichtung die Fördereinheit 19 mit einem Gehäuse 15 und einer darin gelagerten zur Drehbewegung antreibbaren Schnecke 7 zum Fördern und gegebenenfalls Verdichten des aus der Zerkleinerungseinheit 1 abgegebenen Materials angeordnet. Die Längsachse des Rotorkörpers 4 und die Längsachse 3 der Schnecke 7 sind koaxial bzw. gleichachsig zueinander ausgerichtet. Die Zerkleinerungseinheit 1 ist so ausgestaltet, dass das Material in Achsrichtung des Rotorkörpers 4 zur und durch den Ausgangsbereich 6 hindurch, stirnseitig zur Schnecke 7 gefördert wird. Um dem Material diese Bewegungskomponente in Axialrichtung des Rotorkörpers 4 zu verleihen, trägt die dem Rotorkörper 4 gegenüberliegende Innenwand des Zerkleinerungsgehäuses 2 mehrere schraubenlinienförmig verlaufende breite Nuten, die voneinander durch breite Rippen getrennt sind.

Das zylindrische Zerkleinerungsgehäuse 2 weist einen größeren Innendurchmesser auf als das zylindrische Gehäuse 15 der Schnecke 7. Das Zerkleinerungsgehäuse 2 und das Gehäuse 15 sind dementsprechend durch einen konischen Übergangsabschnitt 17 miteinander verbunden, wobei vorgesehen ist, dass im konischen Übergangsabschnitt 17 eine konische Schnecke 18 zur Förderung und gegebenenfalls zum Verdichten des Materials angeordnet ist.

Derartige Einwellenzerkleinerer, insbesondere die Kombination aus Zerkleinerungseinheit und Fördereinheit, sind beispielsweise in der AT407971, Seiten 4 und 5, beschrieben und werden durch Verweis in den Inhalt der vorliegenden Offenbarung aufgenommen.

An das stromabwärtige Stirnende der Schnecke 7 ist der Extruder 9 mit einem Extrudergehäuse 13 und einer darin gelagerten zur Drehbewegung antreibbaren Extruderschnecke 11 angeschlossen. Dabei ist im Gehäuse 15 eine stirnseitige Austragsöffnung 8 ausgebildet ist, über die das Material in die Einzugsöffnung 16 des Extruders 9 zur Extruderschnecke 11 hin gefördert wird.

Die zentrale Längsachse 3 der Schnecke 7 ist zur zentralen Längsachse 10 der Extruderschnecke 11 rechtwinkelig ausgerichtet.

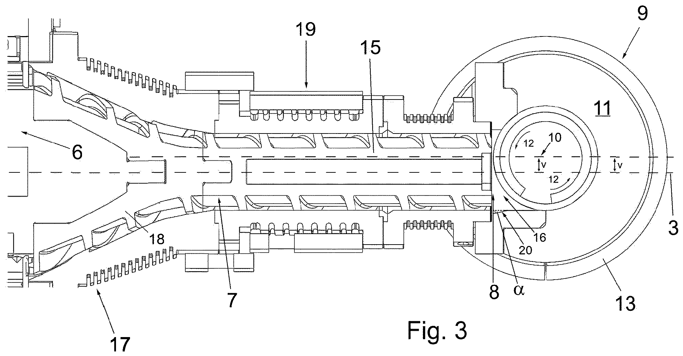

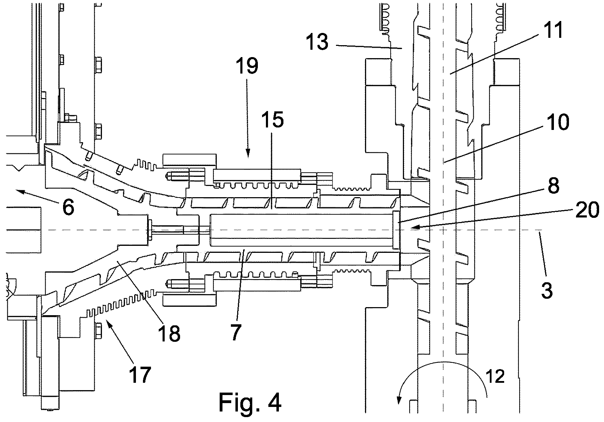

Wie in Fig. 3 und 4 erkennbar, ist die Längsachse 3 der Schnecke 7 zur Längsachse 10 der Extruderschnecke 11 um den Versatz v versetzt und zwar in eine bestimmte Richtung, nämlich in die Drehrichtung 12 der Extruderschnecke 11, betrachtet bei bzw. im bzw. vor dem Bereich der Austragsöffnung 8.

Die Längsachse 3 der Schnecke 7 und die Längsachse 10 der Extruderschnecke 11 befinden sich somit nicht auf gleicher Höhe, sondern die Längsachse 3 der Schnecke 7 liegt bodennäher bzw. in der Vorrichtung gemäß Fig. 1 und 2 unterhalb der Längsachse 10 der Extruderschnecke 11.

Die Längsachse 3 der Schnecke 7 definiert eine x-Achse, die Längsachse 10 der Extruderschnecke 11 definiert eine y-Achse. Der Versatz erfolgt in der z-Achse, also in einer Richtung normal zur Längsachse 3 der Schnecke 7 und zur Längsachse 10 der Extruderschnecke 11.

Wesentlich ist die Richtung des Versatzes v. Der Versatz v erfolgt nämlich in diejenige Richtung, in die sich die Extruderschnecke 11 im Bereich der bzw. direkt vor der Austragsöffnung 8 bzw. der Einzugsöffnung 16 des Extruders dreht (Drehrichtung 12). In der Vorrichtung gemäß den Figuren dreht sich die Extruderschnecke 11, von hinten bzw. vom Antrieb des Extruders 9 aus betrachtet, gegen den Uhrzeigersinn. Die Schnecke 7 mündet, ebenfalls von hinten bzw. vom Antrieb aus betrachtet, seitlich von links in den Extruder 9 ein. Der Versatz v der Längsachse 3 der Schnecke 7 erfolgt dementsprechend nach unten, d.h. die Längsachse 3 der Schnecke 7 mündet in den etwas bodennäheren Bereich der Extruderschnecke 11.

Die Einzugsöffnung 16 des Extruders 9 weist in Richtung des Versatzes v eine im Betrieb im Bodenbereich befindliche Bodenfläche 20 auf, die in einem Winkel α von etwa 15 ° zur Längsachse 3 bzw. zur Horizontalen geneigt ist.

## Patentansprüche

1. Vorrichtung zur Verarbeitung von Material, insbesondere von Kunststoffmaterial, umfassend
- eine Zerkleinerungseinheit (1) zum Zerkleinern und gegebenenfalls Erwärmen des Materials, insbesondere ein Einwellenzerkleinerer, mit einem Zerkleinerungsgehäuse (2), in dem ein zur Drehbewegung um seine Längsachse antreibbarer, insbesondere walzenförmiger, Rotorkörper (4) vorgesehen ist, der an seinem Umfang eine Vielzahl von Zerkleinerungswerkzeugen (14) trägt, und mit einer Zugabeöffnung (5), durch die das zu zerkleinernde Material dem Rotorkörper (4) zuführbar ist,
- eine an einen Ausgangsbereich (6) der Zerkleinerungseinheit (1) anschließende Fördereinheit (19) mit einem Gehäuse (15) und einer darin gelagerten zur Drehbewegung antreibbaren Schnecke (7) zum Fördern und gegebenenfalls Verdichten des aus der Zerkleinerungseinheit (1) abgegebenen Materials, wobei die Zerkleinerungseinheit (1) bzw. der der Rotorkörper (4) so ausgestaltet ist, dass das Material in Achsrichtung des Rotorkörpers (4) zur und durch den Ausgangsbereich (6) hindurch, stirnseitig zur Schnecke (7) förderbar ist, und wobei die Längsachse des Rotorkörpers (4) und die Längsachse (3) der Schnecke (7) im Wesentlichen parallel, insbesondere koaxial, zueinander ausgerichtet sind,
- und einen an die Schnecke (7) anschließenden Extruder (9) mit einem Extrudergehäuse (13) und zumindest einer darin gelagerten zur Drehbewegung antreibbaren Extruderschnecke (11), wobei im Gehäuse (15) eine stirnseitige Austragsöffnung (8) ausgebildet ist, über die das Material in die Einzugsöffnung (16) des Extruders (9) zur Extruderschnecke (11) förderbar ist,
wobei
- die zentrale Längsachse (3) der Schnecke (7) zur zentralen Längsachse (10) der Extruderschnecke (11) winkelig, insbesondere in einem Winkel von 80° bis 100°, vorzugsweise 90°, ausgerichtet ist,
- und dass die Längsachse (3) der Schnecke (7) zur Längsachse (10) der Extruderschnecke (11) um einen Versatz (v) in Richtung der Drehrichtung (12) der Extruderschnecke (11) bei bzw. im Bereich der Austragsöffnung (8) bzw. der Einzugsöffnung (16) versetzt ist,
**dadurch gekennzeichnet, dass** der Versatz (v) im Bereich von 0 < v < R liegt, wobei R der Radius der Extruderschnecke (11) ist.

2. Vorrichtung nach einem der vorangehenden Ansprüche, **dadurch gekennzeichnet, dass** die Längsachse (3) der Schnecke (7) bei einer betriebsfertig aufgestellten Vorrichtung um den Versatz (v) bodennäher ist als die Längsachse (10) der Extruderschnecke (11).

3. Vorrichtung nach einem der vorangehenden Ansprüche, **dadurch gekennzeichnet, dass** die Einzugsöffnung (16) des Extruders (9) in Richtung des Versatzes (v) eine Bodenfläche (20) aufweist, die in einem Winkel α zur Längsachse (3) geneigt ist und sich nach außen öffnet, wobei der Winkel α im Bereich von 0 °< α < 20 ° liegt.

4. Vorrichtung nach einem der vorangehenden Ansprüche, **dadurch gekennzeichnet, dass** das, insbesondere zylindrische, Zerkleinerungsgehäuse (2) einen größeren Innendurchmesser aufweist als das, insbesondere zylindrische, Gehäuse (15) der Schnecke (7).

5. Vorrichtung nach einem der vorangehenden Ansprüche, **dadurch gekennzeichnet, dass** das Gehäuse (15) zylindrisch ist oder konische Form hat.

6. Vorrichtung nach einem der vorangehenden Ansprüche, **dadurch gekennzeichnet, dass** das Zerkleinerungsgehäuse (2) und das Gehäuse (15) durch einen konischen Übergangsabschnitt (17) miteinander verbunden sind, wobei insbesondere vorgesehen ist, dass im konischen Übergangsabschnitt (17) eine konische Schnecke (18) zur Förderung und gegebenenfalls zum Verdichten des Materials angeordnet ist.

7. Vorrichtung nach einem der vorangehenden Ansprüche, **dadurch gekennzeichnet, dass** die Schnecke (7) eine nicht komprimierende Förderschnecke oder eine das Material zumindest teilweise verdichtende, plastifizierende und/oder agglomerierende Schnecke, insbesondere eine Plastifizierschnecke, ist.

8. Vorrichtung nach einem der vorangehenden Ansprüche, **dadurch gekennzeichnet, dass** die Schnecke (7) mit einer in das ihr zugewendete Stirnende des Rotorkörpers (5) hineinragenden Verlängerung ihres Kernes eine Abstützung für den Rotorkörper (5) bildet.

9. Vorrichtung nach einem der vorangehenden Ansprüche, **dadurch gekennzeichnet, dass** der Rotorkörper (5) mit der Schnecke (7), und gegebenenfalls auch mit der konischen Schnecke (18), drehschlüssig gekoppelt und von einem gemeinsamen Antrieb angetrieben ist.

## Claims

1. Device for processing material, in particular plastics material, comprising
- a shredding unit (1) for shredding and optionally heating the material, in particular a single-shaft shredder, having a shredding housing (2) in which a rotor body (4), in particular in the form of a roller, that is able to be driven in rotation about its longitudinal axis is provided, which bears a multiplicity of shredding tools (14) on its circumference, and having a feed opening (5) through which the material to be shredded is able to be fed to the rotor body (4),
- a conveying unit (19), adjoining an output region (6) of the shredding unit (1), having a housing (15) and a screw (7), which is mounted therein and is able to be driven in rotation, for conveying and optionally compressing the material output from the shredding unit (1), wherein the shredding unit (1) or the rotor body (4) is configured in such a way that the material is able to be conveyed in the axial direction of the rotor body (4) towards and through the output region (6), on the front side of the screw (7), and wherein the longitudinal axis of the rotor body (4) and the longitudinal axis (3) of the screw (7) are oriented substantially parallel to, in particular coaxially with, one another,
- and an extruder (9), adjoining the screw (7), having an extruder housing (13) and at least one extruder screw (11) that is mounted therein and able to be driven in rotation, wherein a front-side discharge opening (8) is formed in the housing (15), via which the material is able to be conveyed into the intake opening (16) of the extruder (9) to the extruder screw (11),
wherein
- the central longitudinal axis (3) of the screw (7) is oriented at an angle to the central longitudinal axis (10) of the extruder screw (11), in particular at an angle of 80° to 100°, preferably 90°,
- and the longitudinal axis (3) of the screw (7) is offset with respect to the longitudinal axis (10) of the extruder screw (11) by the offset (v) in the direction of the direction of rotation (12) of the extruder screw (11) at or in the region of the discharge opening (8) or the intake opening (16),
**characterised in that** the offset (v) is in the range 0 < v < R, wherein R is the radius of the extruder screw (11).

2. Device according to any one of the preceding claims, **characterised in that** the longitudinal axis (3) of the screw (7) is closer to the bottom than the longitudinal axis (10) of the extruder screw (11) by the offset (v) when the device is set up ready for operation.

3. Device according to any one of the preceding claims, **characterised in that** the intake opening (16) of the extruder (9) has, in the direction of the offset (v), a bottom surface (20) which is inclined at an angle α with respect to the longitudinal axis (3) and which opens outwards, wherein the angle α is in the range of 0 °< α < 20 °.

4. Device according to any one of the preceding claims, **characterised in that** the, in particular cylindrical, shredding housing (2) has a larger inner diameter than the, in particular cylindrical, housing (15) of the screw (7).

5. Device according to any one of the preceding claims, **characterised in that** the housing (15) is cylindrical or has a conical shape.

6. Device according to any one of the preceding claims, **characterised in that** the shredding housing (2) and the housing (15) are connected to one another by a conical transition portion (17), wherein it is in particular provided that a conical screw (18) is arranged in the conical transition portion (17) for conveying and optionally compressing the material.

7. Device according to any one of the preceding claims, **characterised in that** the screw (7) is a non-compressing conveying screw or a screw which at least partially compresses, plasticises and/or agglomerates the material, in particular a plasticiser screw.

8. Device according to any one of the preceding claims, **characterised in that** the screw (7) forms a support for the rotor body (5) with an extension of its core projecting into the front end of the rotor body (5) facing it.

9. Device according to any one of the preceding claims, **characterised in that** the rotor body (5) is coupled to the screw (7), and optionally also to the conical screw (18), in a rotationally locked manner and is driven by a common drive.

## Revendications

1. Dispositif de traitement de matériau, en particulier de matériau plastique, comprenant
- une unité de déchiquetage (1) pour déchiqueter et éventuellement chauffer le matériau, en particulier une déchiqueteuse à arbre unique, comportant un boîtier de déchiquetage (2), dans lequel un corps de rotor (4), en particulier en forme de rouleau, qui peut être entraîné en rotation autour de son axe longitudinal, est prévu, lequel corps de rotor (4) porte une pluralité d'outils de déchiquetage (14) sur son pourtour et comporte une ouverture d'alimentation (5) à travers laquelle le matériau à déchiqueter peut être amené vers le corps de rotor (4),
- une unité de transport (19) adjacente à une région de sortie (6) de l'unité de déchiquetage (1), avec un boîtier (15) et une vis (7) qui est montée dans celui-ci et qui peut être entraînée en rotation pour transporter et éventuellement comprimer le matériau sortant de l'unité de déchiquetage (1), l'unité de déchiquetage (1) et/ou le corps de rotor (4) étant conçus de telle sorte que le matériau puisse être transporté dans la direction axiale du corps de rotor (4) vers et à travers la région de sortie (6), sur le côté avant de la vis (7), et l'axe longitudinal du corps de rotor (4) et l'axe longitudinal (3) de la vis (7) étant orientés essentiellement parallèlement, en particulier coaxialement, l'un à l'autre,
- et une extrudeuse (9) adjacente à la vis (7) avec un boîtier d'extrudeuse (13) et au moins une vis d'extrudeuse (11) qui est montée à l'intérieur de celui-ci et qui peut être entraînée en rotation, dans lequel une ouverture de décharge (8) côté avant est formée dans le boîtier (15), par l'intermédiaire de laquelle le matériau peut être amené dans l'ouverture d'admission (16) de l'extrudeuse (9) vers la vis d'extrudeuse (11),
dans lequel
- l'axe longitudinal central (3) de la vis (7) est orienté angulairement par rapport à l'axe longitudinal central (10) de la vis d'extrudeuse (11), en particulier à un angle de 80° à 100°, de préférence 90°,
- et en ce que l'axe longitudinal (3) de la vis (7) est déporté par rapport à l'axe longitudinal (10) de la vis d'extrudeuse (11) selon le déport (v) en direction du sens de rotation (12) de la vis d'extrudeuse (11) au niveau de et/ou dans la région de l'ouverture de décharge (8) et/ou de l'ouverture d'admission (16),
**caractérisé en ce que** le déport (v) se situe dans la région de 0 < v < R, R étant le rayon de la vis d'extrudeuse (11).

2. Dispositif selon l'une quelconque des revendications précédentes, **caractérisé en ce que** l'axe longitudinal (3) de la vis (7) pour un dispositif monté en état de marche est plus proche du sol selon le déport (v) que l'axe longitudinal (10) de la vis d'extrudeuse (11).

3. Dispositif selon l'une quelconque des revendications précédentes, **caractérisé en ce que** l'ouverture d'admission (16) de l'extrudeuse (9) présente dans le sens du déport (v) une surface au sol (20) qui est inclinée à un angle α par rapport à l'axe longitudinal (3) et s'ouvre vers l'extérieur, dans lequel l'angle α se situe dans la plage de 0 °< α < 20 °.

4. Dispositif selon l'une quelconque des revendications précédentes, **caractérisé en ce que** le boîtier de déchiquetage (2), en particulier cylindrique, présente un diamètre interne supérieur à celui du boîtier (15), en particulier cylindrique, de la vis (7).

5. Dispositif selon l'une quelconque des revendications précédentes, **caractérisé en ce que** le boîtier (15) est cylindrique ou présente une forme conique.

6. Dispositif selon l'une quelconque des revendications précédentes, **caractérisé en ce que** le boîtier de déchiquetage (2) et le boîtier (15) sont reliés l'un à l'autre par un tronçon de raccordement (17) conique, dans lequel il est prévu en particulier qu'une vis conique (18) est agencée dans le tronçon de raccordement (17) conique pour le transport et éventuellement pour la compression du matériau.

7. Dispositif selon l'une quelconque des revendications précédentes, **caractérisé en ce que** la vis (7) est une vis sans fin sans compression ou une vis comprimant au moins partiellement, plastifiant et/ou agglomérant le matériau, en particulier une vis de plastification.

8. Dispositif selon l'une quelconque des revendications précédentes, **caractérisé en ce que** la vis (7) forme avec un prolongement, dépassant dans l'extrémité frontale, orientée vers la vis, du corps de rotor (5), de son noyau un support pour le corps de rotor (5).

9. Dispositif selon l'une quelconque des revendications précédentes, **caractérisé en ce que** le corps de rotor (5) est couplé de façon solidaire en rotation avec la vis (7), et éventuellement aussi avec la vis conique (18), et est entraîné par un mécanisme de commande commun.
